# FASCICULE DE BREVET EUROPEEN

(11) **EP 2 590 001 B1**
(45) Date de publication et mention de la délivrance du brevet: **27.01.2016**
(21) Numéro de dépôt: 11187586.0
(22) Date de dépôt: 02.11.2011
(51) Int. Cl.: G02B 25/02

(54) **Loupe à illumination**
Lupe mit Beleuchtung
Magnifying glass with light

(43) Date de publication de la demande: 08.05.2013
(73) Titulaire: De Falcis, Daniele, 2503 Bienne (CH)
(72) Inventeur: De Falcis, Daniele, 2503 Bienne (CH); Zerbini, Silvano, 2605 Sonceboz (CH)
(74) Mandataire: Richard, François-Régis

(56) Documents cités:
- AU-B2- 478 331
- CN-U- 201 852 996
- CN-Y- 2 916 661
- DE-U1-202009 009 002
- KR-U- 20100 004 340

## Description

### Domaine technique

La présente invention a pour objet une loupe à illumination destinée à être maintenue par le pourtour de l'oeil.

Plus précisément l'invention concerne une loupe comprenant un oeilleton et un bâti supportant au moins une lentille. La loupe comporte en outre une source lumineuse, une source d'alimentation électrique et au moins un circuit électronique permettant à l'utilisateur de commander le fonctionnement de la source lumineuse.

### Etat de la technique

L'utilisation de loupes à illumination est connue, et par conséquent ces dispositifs font l'objet de nombreux développements.

Certaines loupes sont positionnables sur la tête, par exemple à l'aide d'un bandeau, afin d'avoir une utilisation prolongée. Dans ce cas le bloc électronique assurant l'alimentation et la commande de la source lumineuse est souvent séparé de la partie optique.

D'autres loupes peuvent être posées sur l'objet à étudier (loupes de table), ou maintenues par le pourtour de l'oeil de l'observateur (loupes d'horloger ou de bijoutier). La partie électronique est alors généralement accolée à la partie optique de façon à ce que l'encombrement soit le plus faible possible.

L'enseignement du modèle d'utilité CN 201852996 U s'inscrit dans ce cadre. La loupe de table à LEDs qui est présentée comprend un oeilleton télescopique, contenant la partie optique, juxtaposé à un cylindre où est logée la partie électronique (interrupteur, LEDs, pile, etc.).

Le brevet CN 2916661Y décrit une loupe de table à lentilles fixes similaire à celle qui vient d'être mentionnée.

Dans le domaine des loupes d'horloger, la demande de brevet WO 2007/136520 décrit une loupe à LEDs destinée à être maintenue par le pourtour de l'oeil. Ici la partie électronique est contenue dans un boîtier vissé dans le prolongement d'un oeilleton portant la lentille.

Toutefois, la juxtaposition de la partie électronique à la partie optique entraîne un allongement de la loupe, ce qui la rend moins confortable au porter. Pourtant, il est important qu'une loupe portée au niveau de l'oeil soit la plus compacte possible pour garantir le confort de l'utilisateur.

### Divulgation de l'invention

Un but principal de la présente invention est de pallier les inconvénients des loupes à illumination déjà connues, en proposant une telle loupe de construction simple et compacte, au confort amélioré.

A cet égard, la présente invention concerne une loupe à illumination comprenant
un oeilleton,
un bâti supportant au moins une lentille,
au moins une source lumineuse,
au moins une source d'alimentation électrique et,
au moins un circuit électronique permettant à l'utilisateur de commander le fonctionnement de la source lumineuse,
l'oeilleton et le bâti étant de formes générales cylindriques, et étant agencés coaxialement de façon à être au moins partiellement imbriqués l'un dans l'autre, pour définir entre eux un logement pour la ou les sources d'alimentation électrique et le ou les circuits électroniques. En outre, le bâti présente une portion cylindrique agencée sensiblement dans le prolongement de l'oeilleton à l'exclusion d'au moins une partie faisant saillie, suivant une direction radiale, dans laquelle est agencé un emplacement, pour une source lumineuse, présentant une ouverture permettant d'assurer l'éclairage d'un objet à observer.

Grâce à la combinaison de l'agencement original du bâti par rapport à l'oeilleton, et de la position particulière de la partie électronique, l'encombrement de la loupe est réduit et sa masse est bien répartie.

On désignera par la suite le « côté oeil » comme étant le côté de la loupe en contact avec le pourtour de l'oeil, par opposition au « côté objet » qui est le côté de la loupe le plus près de l'objet à observer.

De manière préférée, la paroi externe de l'oeilleton a une forme de cylindre évasé à l'une de ses extrémités pour que la loupe soit bien maintenue par le pourtour de l'oeil.

La paroi interne de l'oeilleton est partiellement évidée de façon loger une partie du bâti, et présente un taraudage destiné à coopérer avec un filetage du bâti, afin d'assembler la loupe par vissage.

Selon un mode de réalisation préféré, le bâti est l'organe servant de support aux éléments qui composent la loupe. Sa structure est étudiée à la fois pour qu'il porte la ou les lentilles, pour qu'il supporte éventuellement la ou les sources lumineuses, pour qu'il puisse s'imbriquer dans l'oeilleton, et pour que la partie électronique soit logée à l'intérieur des parois de la loupe.

En guise de logement de la partie électronique, le bâti comporte un évidement ayant sensiblement la forme générale d'une section de toroïde. L'évidement est d'autant plus grand que le nombre de sources d'alimentation est important, il peut avoir la forme générale d'un toroïde entier si cela est nécessaire pour loger toute la partie électronique. De cette manière, la partie électronique est entièrement contenue entre la paroi interne de l'oeilleton et la paroi externe du bâti.

Le bâti présente aussi un emplacement supplémentaire, ouvert du côté objet, orienté suivant la direction axiale de la loupe, pour loger une source lumineuse telle qu'une LED de façon à éclairer l'objet à observer. De manière alternative, on peut prévoir plusieurs emplacements dans le bâti, chacun d'entre eux logeant une LED, pour que la lumière soit plus homogène.

Le bâti comprend en outre, en périphérie, une ouverture d'accès à un interrupteur connecté à au moins un circuit électronique, de sorte que l'utilisateur puisse facilement mettre la source lumineuse sous tension si la luminosité ambiante n'est pas suffisante. De manière alternative, l'ouverture d'accès à l'interrupteur peut être prévue sur l'oeilleton.

Selon un mode de réalisation préféré de l'invention, le bâti comprend un filetage agencé pour coopérer avec le taraudage de l'oeilleton, de manière à visser les deux parties de la loupe. Une autre possibilité d'assemblage pourrait être de clipser le bâti dans l'oeilleton.

De façon préférée, le bâti peut comporter au moins un organe de retenue amovible d'une ou plusieurs lentilles, pour que l'utilisateur puisse échanger aisément la ou les lentilles et donc adapter le grossissement de la loupe à ses besoins. L'organe de retenue peut comprendre par exemple un système de clips.

De manière alternative, la ou les lentilles peuvent être collées au bâti par leurs tranches. De cette manière, quel que soit le mode de réalisation choisi, la ou les lentilles ne risquent pas de tomber par inadvertance si l'utilisateur a besoin d'ouvrir la loupe.

Selon une variante de réalisation préférée, on peut prévoir que la ou les LEDs aient une intensité et/ou une longueur d'onde variable pour que l'utilisateur puisse choisir ses conditions d'observation.

En ce qui concerne la source d'alimentation, celle-ci comprend au moins une pile ou une batterie rechargeable. Si plusieurs sources d'alimentation sont utilisées, celles-ci sont préférentiellement réparties de façon uniforme autour de l'axe de la loupe.

De manière préférée, le ou les circuits électroniques ainsi que la ou les sources d'alimentation sont maintenus sur une bande, par exemple une bande adhésive, afin de faciliter la production de masse. La bande peut avantageusement être recouverte d'un matériau étanche pour protéger la partie électronique.

Par ailleurs, on peut prévoir d'ajouter des connecteurs électriques reliés au moins indirectement à la source d'alimentation, et accessibles par une ou plusieurs ouvertures spécifiques de la loupe, lorsque celle-ci comporte une batterie rechargeable.

De cette manière, le rechargement de la batterie peut être effectué à l'aide d'une station d'accueil, comportant elle aussi des connecteurs prévus pour coopérer avec les connecteurs de la loupe. Grâce à ce dispositif, l'utilisateur n'a pas besoin de démonter la loupe pour avoir accès aux batteries et les recharger, car le seul contact de la loupe avec la station d'accueil assure la fonction de rechargement.

Finalement, selon la quantité de loupes produites, les pièces peuvent avantageusement être usinées, ou par exemple moulées par injection.

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- la figure 1 représente une vue en coupe longitudinale d'un oeilleton d'une loupe à illumination selon un mode de réalisation préféré de l'invention ;
- la figure 2 représente une vue de face d'un bâti de la loupe vu depuis le côté oeil;
- la figure 3 est une vue en coupe transversale du bâti selon la ligne III-III de la figure 2 ;
- la figure 4 est une vue en coupe transversale de la loupe selon l'invention;
- la figure 5 est une représentation schématique de la loupe vue depuis le côté objet.

### Mode(s) de réalisation de l'invention

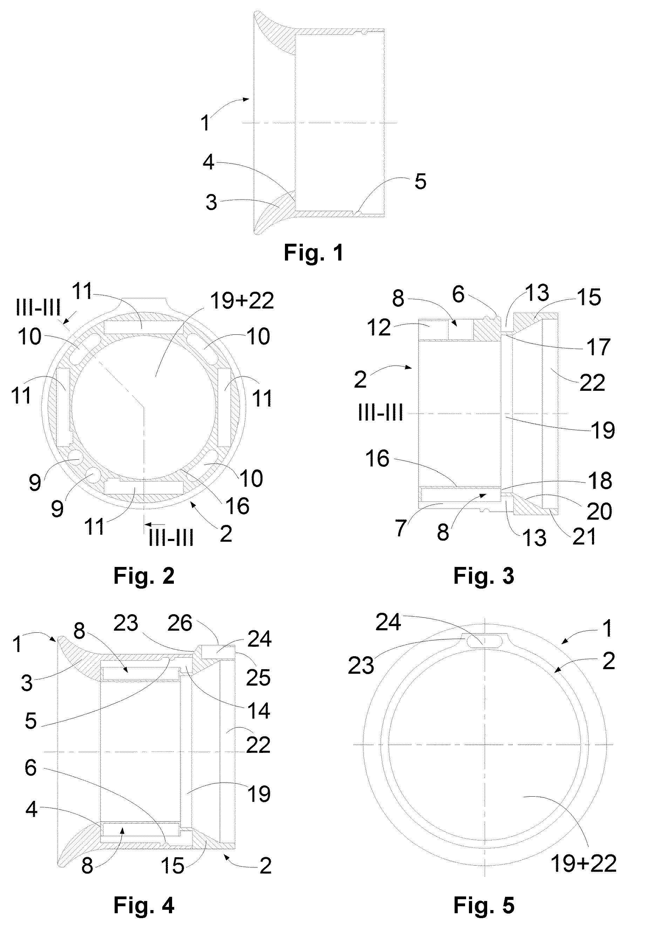

Les figures 1 à 3 illustrent un oeilleton et un bâti de la loupe selon un mode de réalisation préféré, séparés l'un de l'autre, suivant différentes vues utiles à la compréhension de l'invention. Les figures 4 et 5 représentent différentes vues de la loupe à illumination selon un mode de réalisation préféré de l'invention.

La loupe selon un mode préféré de réalisation comporte un oeilleton 1 à l'intérieur duquel est partiellement imbriqué un bâti 2.

Il apparaît sur la figure 1 que la paroi externe de l'oeilleton 1 a la forme d'un cylindre creux évasé à l'une de ses extrémités, la partie évasée 3 étant destinée à être mise en contact avec le pourtour de l'oeil, pour tenir la loupe devant l'oeil d'un utilisateur.

La paroi interne de l'oeilleton 1 est partiellement évidée pour accueillir le bâti 2. Plus précisément, elle comporte une surface de butée 4 sur laquelle le bâti 2 est appuyé, ainsi qu'un taraudage 5 agencé pour coopérer avec un filetage 6 (voir figure 3) du bâti 2, de manière à ce que l'oeilleton 1 et le bâti 2 soient assemblés par vissage.

Le bâti 2 est ici, à titre indicatif et non limitatif, l'organe servant de support à toutes les pièces de la loupe, et il apparaît notamment sur les figures 2 et 3 que sa forme est très travaillée.

La paroi externe du bâti 2 a une forme générale sensiblement cylindrique. Elle présente une première portion 7, côté oeil, comportant un évidement 8 ayant sensiblement une forme générale de toroïde. L'évidement 8 est prévu pour loger un dispositif électronique, comportant dans le mode de réalisation présenté à titre indicatif et non limitatif, une bande (non représentée) sur laquelle sont maintenus deux connecteurs 9, trois circuits électroniques 10 et quatre batteries 11. Les positions possibles des éléments placés sur la bande sont schématiquement représentées sur la figure 2.

Il ressort de la vue en coupe de la figure 3, selon l'axe III-III de la figure 2, que la forme et les dimensions de l'évidement 8 sont sensiblement adaptées à celles des éléments fixés sur la bande. Dans les zones où se trouvent les batteries 11, la longueur de l'évidement 8 est plus grande que dans les zones où sont situés les circuits électroniques 10. De cette manière, ces éléments ne peuvent pas bouger lorsque la loupe est assemblée.

Par ailleurs, deux trous sont réalisés dans le bâti 2 pour que les deux connecteurs 9 soient directement accessibles lorsque la loupe est assemblée. En coopérant avec des connecteurs prévus sur une station d'accueil, les connecteurs 9 permettent le rechargement des batteries 11 de la loupe.

Pour fixer complètement le dispositif électronique, des trous 12 servant de points d'ancrage de la bande sont prévus dans le corps du bâti 2 là où il n'est pas évidé sur toute sa longueur, c'est-à-dire dans le mode de réalisation présenté, dans le prolongement des circuits électroniques 10.

L'extrémité de la première portion 7 de la paroi externe du bâti 2, côté objet, comporte par ailleurs le filetage 6 coopérant avec le taraudage 5 de la partie interne de l'oeilleton 1. On notera que là où le bâti 2 est évidé pour accueillir les batteries 11, la longueur de l'évidement 8 est telle que celui-ci empiète sur la zone où devrait se trouver le filetage 6. En conséquence, le filetage 6 du bâti 2 n'est pas présent sur toute la circonférence de la paroi externe, ce qui apparait clairement sur la figure 3.

La paroi externe du bâti 2 comprend en outre une deuxième portion cylindrique 13, de section plus petite que la première portion 7, de façon à laisser un espace libre 14 (visible sur la figure 4) entre l'oeilleton 1 et le bâti 2 lorsque ceux-ci sont assemblés, dont la fonction sera exposée plus loin.

L'extrémité de la paroi externe du bâti 2 comporte enfin une troisième portion cyclindrique 15 dont le diamètre externe est identique au diamètre externe de l'oeilleton 1, sur quasiment toute la périphérie.

La paroi interne du bâti 2 a quant à elle sensiblement la forme d'un cyclindre creux évasé à son extrémité, côté objet. Plus précisément, la paroi interne présente une première portion cylindrique 16, côté oeil, dont le diamètre interne est égal au diamètre interne de la surface de butée 4 présente sur l'oeilleton 1.

Grâce aux choix judicieux des diamètres des portions cylindriques 15 et 16 du bâti 2, la loupe semble être formée d'un corps en une seule pièce lorsque les différents éléments sont assemblés.

A la suite de la première portion cylindrique 16 de la paroi interne du bâti, côté objet, se trouve une deuxième portion cylindrique 17 de rayon plus grand que celui de la première portion. La jonction entre les portions cylindriques 16 et 17 définit une surface d'appui 18 contre laquelle est placée une première lentille 19.

La paroi interne du bâti 2 présente ensuite une troisième portion conique 20, et une quatrième portion cylindrique 21, de section plus grande que la portion cylindrique 17, où est placée une seconde lentille 22. Dans le mode de réalisation présenté, les deux lentilles 19 et 22 sont collées par leurs tranches pour assurer leur fixation au bâti.

En alternative, on pourrait prévoir qu'elles soient clipsées ou retenues par une ou plusieurs bagues vissées.

Il apparaît enfin sur les figures 4 et 5 que, dans le mode de réalisation présenté, la portion cylindrique 15 comporte une partie 23 faisant saillie où se trouve un emplacement 24 prévu pour loger une LED et un interrupteur (non représentés). L'emplacement comprend une première ouverture 25 côté objet et orientée parallèlement à l'axe de la loupe, pour éclairer l'objet observé, et une seconde ouverture 26 latérale pour que l'utilisateur puisse accéder à l'interrupteur. La LED et l'interrupteur sont connectés au dispositif électronique grâce à des fils (non représentés) passant dans l'espace vide 14 présent entre l'oeilleton 1 et le bâti 2.

La description qui précède s'attache à décrire un mode de réalisation particulier à titre d'illustration non limitative, et l'invention n'est pas limitée à certaines caractéristiques particulières qui viennent d'être décrites, comme par exemple la forme complexe du bâti de la loupe. De nombreux autres modes de réalisation pourraient être envisagés sans sortir du cadre de l'invention. Par exemple, les moyens d'assemblage du bâti dans l'oeilleton ne sont pas limitatifs et l'homme du métier ne rencontrera pas de difficulté particulière pour les adapter en fonction de ses propres besoins.

Selon un mode de réalisation alternatif, les moyens d'assemblage du bâti dans l'oeilleton pourraient comprendre un certain nombre de clips solidaires de l'oeilleton, et uniformément répartis dans l'espace vide présent entre l'oeilleton et la loupe. L'agencement du bâti dans l'oeilleton serait alors réalisé de manière similaire à ce qui a été décrit.

Par ailleurs les différents éléments composant la loupe pourraient aussi être portés par l'oeilleton, bien qu'il soit plus facile d'usiner l'extérieur du bâti que l'intérieur de l'oeilleton.

## Revendications

1. Loupe comportant un oeilleton (1), destiné à être maintenu devant l'oeil d'un utilisateur par le pourtour de l'oeil, ainsi qu'un bâti (2) supportant au moins une lentille (19, 22), la loupe comprenant au moins une source lumineuse ainsi qu'au moins une source d'alimentation électrique (11) et au moins un circuit électronique (10) destiné à permettre à l'utilisateur de commander le fonctionnement de ladite source lumineuse, **caractérisée**
**en ce que** ledit oeilleton (1) et ledit bâti (2) sont de formes générales cylindriques et agencés coaxialement en étant au moins partiellement imbriqués l'un dans l'autre pour définir entre eux un logement (8) pour ladite ou lesdites sources d'alimentation électrique (11) et ledit ou lesdits circuits électroniques (10), et
**en ce que** ledit bâti (2) présente dans le prolongement dudit oeilleton (1), formant ainsi l'extrémité de la paroi externe du bâti, une portion de forme cylindrique (15) à l'exclusion d'au moins une partie (23) faisant saillie, suivant une direction radiale, dans laquelle est agencé un emplacement (24), pour la source lumineuse, présentant une ouverture (25) côté objet et orientée parallèlement à l'axe de la loupe, permettent ainsi d'assurer l'éclairage d'un objet à observer.

2. Loupe selon la revendication 1, **caractérisée en ce que** ladite ou lesdites sources lumineuses sont des LEDs.

3. Loupe selon l'une quelconque des revendications précédentes, **caractérisée en ce que** ledit logement (8) présente une forme générale de section de toroïde.

4. Loupe selon l'une quelconque des revendications précédentes, **caractérisée en ce que** ledit oeilleton (1) ou ledit bâti (2) comporte en périphérie une ouverture d'accès (26) à un interrupteur connecté audit ou auxdits circuits électroniques (10).

5. Loupe selon l'une quelconque des revendications précédentes, **caractérisée en ce que** ledit oeilleton (1) comprend un taraudage (5) agencé pour coopérer avec un filetage (6) du bâti (2), pour assembler la loupe par vissage.

6. Loupe selon l'une quelconque des revendications précédentes, **caractérisée en ce que** ledit bâti (2) comporte un organe de retenue amovible d'au moins une lentille (19, 22).

7. Loupe selon l'une quelconque des revendications précédentes, **caractérisée en ce que** ladite ou lesdites sources lumineuses ont une intensité variable et/ou une longueur d'onde variable.

8. Loupe selon l'une quelconque des revendications précédentes, **caractérisée en ce que** ladite ou lesdites sources d'alimentation électriques (11) comprennent au moins une pile ou une batterie rechargeable.

9. Loupe selon l'une quelconque des revendications précédentes, **caractérisée en ce que** plusieurs sources d'alimentation (11) sont réparties régulièrement autour de l'axe de la loupe.

10. Loupe selon l'une quelconque des revendications précédentes, **caractérisée en ce que** ledit ou lesdits circuits électroniques (10) ainsi que ladite ou lesdites sources d'alimentation sont fixés sur une bande.

11. Loupe selon l'une quelconque des revendications précédentes, **caractérisée en ce que** ladite bande est recouverte d'un matériau étanche.

12. Loupe selon l'une quelconque des revendications précédentes, **caractérisée en ce que** ledit bâti (2) comporte une pluralité d'emplacements (24) destinés à loger chacun au moins une source lumineuse, lesdits emplacements étant régulièrement répartis sur ledit bâti (2), et étant ouverts du côté objet suivant la direction axiale de la loupe.

13. Loupe selon l'une quelconque des revendications précédentes, **caractérisée en ce que** l'oeilleton (1) et le bâti (2) sont usinés ou moulés par injection.

14. Loupe selon l'une quelconque des revendications précédentes, lorsque ladite ou lesdites sources d'alimentation électrique (11) comprennent au moins une batterie rechargeable, **caractérisée en ce qu'**elle comporte au moins un connecteur électrique accessible par une ouverture spécifique de la loupe, ledit connecteur électrique étant relié au moins indirectement à ladite batterie rechargeable (11).

15. Ensemble comportant une loupe selon la revendication 14 ainsi qu'une station d'accueil, **caractérisé en ce que** ladite station d'accueil comprend au moins un connecteur prévu pour coopérer avec ledit ou lesdits connecteurs de la loupe, pour recharger ladite batterie (11) de ladite loupe.

## Patentansprüche

1. Lupe, welche eine Augenmuschel (1), die dazu bestimmt ist, von der Umrandung des Auges vor dem Auge eines Benutzers gehalten zu werden, sowie ein Gehäuse (2), das wenigstens eine Linse (19, 22) trägt, aufweist, wobei die Lupe wenigstens eine Lichtquelle sowie wenigstens eine Stromversorgungsquelle (11) und wenigstens eine elektronische Schaltung (10), die dazu bestimmt ist, es dem Benutzer zu ermöglichen, die Funktion der Lichtquelle zu steuern, aufweist, **dadurch gekennzeichnet,**
**dass** die Augenmuschel (1) und das Gehäuse (2) jeweils eine im Wesentlichen zylindrische Form aufweisen und koaxial angeordnet sind, wobei sie wenigstens teilweise ineinander geschachtelt angeordnet sind, um zwischen sich eine Aufnahme (8) für die Stromversorgungsquelle(n) (11) und die elektronische(n) Schaltung(en) (10) zu definieren, und
**dass** das Gehäuse (2) in der Verlängerung der Augenmuschel (1), auf diese Weise das Ende der Außenwand des Gehäuses bildend, einen Abschnitt von zylindrischer Form (15) aufweist, mit Ausnahme wenigstens eines entlang einer radialen Richtung vorstehenden Teils (23), in welchem ein Aufnahmeplatz (24) für die Lichtquelle angeordnet ist, der eine Öffnung (25) aufweist, die sich auf der Seite des Objekts befindet und parallel zur Achse der Lupe ausgerichtet ist, wodurch sie ermöglicht, die Beleuchtung eines zu betrachtenden Objekts sicherzustellen.

2. Lupe nach Anspruch 1, **dadurch gekennzeichnet, dass** die Lichtquelle(n) LEDs sind.

3. Lupe nach einem der vorhergehenden Ansprüche, **dadurch gekennzeichnet, dass** die Aufnahme (8) im Wesentlichen eine Form eines Torusabschnitts aufweist.

4. Lupe nach einem der vorhergehenden Ansprüche, **dadurch gekennzeichnet, dass** die Augenmuschel (1) oder das Gehäuse (2) am Umfang eine Zugangsöffnung (26) zu einem Schalter aufweist, der mit der oder den elektronischen Schaltung(en) (10) verbunden ist.

5. Lupe nach einem der vorhergehenden Ansprüche, **dadurch gekennzeichnet, dass** die Augenmuschel (1) ein Innengewinde (5) aufweist, das dazu eingerichtet ist, mit einem Gewinde (6) des Gehäuses (2) zusammenzuwirken, um die Lupe zusammenzuschrauben.

6. Lupe nach einem der vorhergehenden Ansprüche, **dadurch gekennzeichnet, dass** das Gehäuse (2) ein Organ zum lösbaren Halten wenigstens einer Linse (19, 22) aufweist.

7. Lupe nach einem der vorhergehenden Ansprüche, **dadurch gekennzeichnet, dass** die Lichtquelle(n) eine variable Intensität und/oder eine variable Wellenlänge aufweist (aufweisen).

8. Lupe nach einem der vorhergehenden Ansprüche, **dadurch gekennzeichnet, dass** die Stromversorgungsquelle (n) (11) wenigstens eine Batterie oder eine wiederaufladbare Batterie aufweist (aufweisen).

9. Lupe nach einem der vorhergehenden Ansprüche, **dadurch gekennzeichnet, dass** mehrere Stromversorgungsquellen (11) gleichmäßig um die Achse der Lupe verteilt sind.

10. Lupe nach einem der vorhergehenden Ansprüche, **dadurch gekennzeichnet, dass** die elektronische(n) Schaltung ( en ) ( 10 ) sowie die Stromversorgungsquelle(n) auf einem Band befestigt sind.

11. Lupe nach einem der vorhergehenden Ansprüche, **dadurch gekennzeichnet, dass** das Band von einem dichten Material bedeckt ist.

12. Lupe nach einem der vorhergehenden Ansprüche, **dadurch gekennzeichnet, dass** das Gehäuse (2) mehrere Aufnahmeplätze (24) aufweist, die dazu bestimmt sind, jeweils wenigstens eine Lichtquelle aufzunehmen, wobei diese Aufnahmeplätze gleichmäßig auf dem Gehäuse (2) verteilt sind und auf der Seite des Objekts entlang der axialen Richtung der Lupe offen sind.

13. Lupe nach einem der vorhergehenden Ansprüche, **dadurch gekennzeichnet, dass** die Augenmuschel (1) und das Gehäuse (2) bearbeitet oder spritzgegossen sind.

14. Lupe nach einem der vorhergehenden Ansprüche, wenn die Stromversorgungsquelle(n) (11) wenigstens eine wiederaufladbare Batterie aufweist (aufweisen), **dadurch gekennzeichnet, dass** sie wenigstens einen elektrischen Verbinder aufweist, der durch eine spezielle Öffnung der Lupe zugänglich ist, wobei der elektrische Verbinder wenigstens indirekt mit der wiederaufladbaren Batterie (11) verbunden ist.

15. Anordnung, welche eine Lupe nach Anspruch 14 sowie eine Andockstation enthält, **dadurch gekennzeichnet, dass** die Andockstation wenigstens einen Verbinder aufweist, der dazu vorgesehen ist, mit dem oder den Verbinder(n) der Lupe zusammenzuwirken, um die Batterie (11) der Lupe wiederaufzuladen.

## Claims

1. Loupe comprising an eye cup (1), intended to be held in front of the eye of a user by his eye contour, and a holder (2) holding at least one lens (19, 22), the loupe including at least one light source and at least one electrical power source (11), and at least one electronic circuit (10) intended to allow the user to control operation of said light source, **characterized**
**in that** said eye cup (1) and said holder (2) are generally cylindrical in shape and arranged coaxially while at least partially interpenetrating in order to define therebetween a housing (8) for said electrical power source(s) (11) and said electronic circuit(s) (10) ;
and **in that** said holder (2) comprises, in the extension of said eye cup (1), thus forming the end of the external wall of the holder, a section (15) that is cylindrically shaped except for at least one portion (23) that protrudes, in a radial direction, in which is arranged a site (24), for the light source, having an aperture (25) on the object side and oriented parallel to the axis of the loupe, thus making it possible to illuminate an object to be observed.

2. Loupe according to Claim 1, **characterized in that** said light source(s) are LEDs.

3. Loupe according to either one of the preceding claims, **characterized in that** said housing (8) has a general shape of toroidal cross section.

4. Loupe according to any one of the preceding claims, **characterized in that** said eye cup (1) or said holder (2) comprises on its periphery an access aperture (26) allowing a switch connected to said electronic circuit(s) (10) to be accessed.

5. Loupe according to any one of the preceding claims, **characterized in that** said eye cup (1) comprises an internal thread (5) arranged to interact with an external thread (6) of the holder (2), in order to allow the loupe to be assembled by screwing.

6. Loupe according to any one of the preceding claims, **characterized in that** said holder (2) comprises a removable member for retaining at least one lens (19, 22).

7. Loupe according to any one of the preceding claims, **characterized in that** the brightness and/or wavelength of said light source(s) are/is variable.

8. Loupe according to any one of the preceding claims, **characterized in that** said electrical power source (s) (11) comprise at least one battery or one rechargeable battery.

9. Loupe according to any one of the preceding claims, **characterized in that** a plurality of power sources (11) are regularly distributed around the axis of the loupe.

10. Loupe according to any one of the preceding claims, **characterized in that** said electronic circuit(s) (10) and said power source(s) are fastened to a strip.

11. Loupe according to any one of the preceding claims, **characterized in that** said strip is covered with an impermeable material.

12. Loupe according to any one of the preceding claims, **characterized in that** said holder (2) comprises a plurality of sites (24) intended to house each at least one light source, said sites being regularly distributed over said holder (2) and being open on the object side in the axial direction of the loupe.

13. Loupe according to any one of the preceding claims, **characterized in that** the eye cup (1) and the holder (2) are machined or injection moulded.

14. Loupe according to any one of the preceding claims, when said electrical power source (s) (11) comprise at least one rechargeable battery, **characterized in that** it comprises at least one electrical connector accessible via a specific aperture of the loupe, said electrical connector being connected at least indirectly to said rechargeable battery (11).

15. Assembly comprising a loupe according to Claim 14 and a docking station, **characterized in that** said docking station comprises at least one connector provided to interact with said connector(s) of the loupe, in order to recharge said battery (11) of said loupe.
